# EUROPÄISCHE PATENTSCHRIFT

(11) **EP 1 511 623 B1**
(45) Veröffentlichungstag und Bekanntmachung des Hinweises auf die Patenterteilung: **17.05.2006**
(21) Anmeldenummer: 04709570.8
(22) Anmeldetag: 10.02.2004
(51) Int. Cl.: B32B 15/10, B32B 21/08, E04C 2/00

(54) **BAUPLATTE**
BUILDING BOARD
PANNEAU DE CONSTRUCTION

(30) Priorität: 14.02.2003 DE 10306118
(43) Veröffentlichungstag der Anmeldung: 09.03.2005
(73) Patentinhaber: Kronotec AG, 6006 Luzern (CH)
(72) Erfinder: HASCH, Joachim, 12055 Berlin (DE); GOTTFRIED, Stefan, 63867 Johannesberg (DE)
(74) Vertreter: Rehmann, Thorsten
(86) Internationale Anmeldenummer: PCT/DE2004/000226
(87) Internationale Veröffentlichungsnummer: WO 2004/071764

(56) Entgegenhaltungen:
- EP-A- 1 219 409
- AU-A- 551 000
- DE-C- 10 001 227
- DE-U- 20 017 058
- DE-U- 20 105 808
- DE-U- 29 511 984
- DE-U- 29 713 040
- GB-A- 2 306 389
- US-A- 4 470 357
- US-A- 4 520 057

## Beschreibung

Die Erfindung betrifft eine Bauplatte zur Verwendung als Decken- oder Wandelement im Hausbau.

Zwischendecken werden in Häusern als Brettstapeldecken, als Dielenboden, die auf sichtbare und nicht sichtbare Balkenlagen aufgelegt und befestigt werden, und als Massivdecken aus Beton eingesetzt. Diese Decken müssen vor Ort angefertigt werden. Ihre Herstellung ist entsprechend zeitaufwändig. Im Fertighausbau werden vorgefertigte Brettstapelelemente verwendet.

Wände werden, wenn sie nicht gemauert oder aus Beton gegossen sind, in Ständerbauweise ausgeführt, d. h. es wird ein Balkenfachwerk errichtet, das mit Holzwerkstoff oder Gipskartonplatten verkleidet wird.

In der DE 100 01 227 C1 wird ein Wand- oder Deckenpaneel mit einem Kern aus einer OSB-Holzwerkstoffplatte offenbart, das mit einer transparenten Deckschicht, die aus Papier oder Kunststoff bestehen kann, abgedeckt ist. Dieses Paneel besteht aus einer einzigen OSB-Holzwerkstoffplatte, die bei der Herstellung in mehreren Schichten, also einer Mittelschicht und zwei Deckschichten, gestreut wurde.

In der EP 1 219 409 A1 wird ein Verfahren zur Herstellung von dicken, mehrschichtigen Balken oder Platten aus Holzbrettern beschrieben. Aus den einzelnen Holzbrettern werden großflächige Tafeln hergestellt, die dann mit einem wärmehärtbaren Kunstharzleim verklebt werden. Dazu werden die beleimten Tafeln in geringem Abstand übereinander gestapelt und dann in einer Presse unter Temperatur und Druck verpresst. Das Tafelpaket wird dabei verdichtet und fertig gepresst.

Durch die DE 200 17 058 U1 werden Bodenelemente offenbart, die aus einer Werkstoffschicht und einer Deckschicht aus Massivholz mit mindestens einer Stärke von 6 mm bestehen. Hierdurch soll der Eindruck eines Bodenelements aus Massivholz erweckt werden. Um Kosten zu sparen, wird die Deckschicht aus Massivholz auf eine Werkstoffschicht aus kleinen Holzteilen aufgeklebt.

In der DE 201 05 808 U1 wird ein Plattenelement aus Sperrholz mit kreuzweise zueinander verleimten, durchgehenden Furnierschichten beschrieben, das mittels eines Sägeschnitts in einzelne Scheiben aufgetrennt werden kann. Die Scheiben werden als dekorative Elemente für Wand- und Bodenbeläge in verschiedenen Verlegemustern verlegt.

Die GB 2 306 389 A1 offenbart eine Platte, bestehend aus einer Vielzahl von Holzfurnierlagen aus tropischen Harthölzern mittlerer Dichte und aus einer oder mehreren Metalllagen. Die Metalllagen können aus Aluminium, Edelstahl oder Kupfer bestehen. Die einzelnen Holz- und Metalllagen werden mit einem thermisch aushärtenden phenolischen Harz verklebt.

In der AU 551 000 A wird eine Platte aus Metall- und Holzlagen beschrieben, bei der die Außenlagen aus Metallplatten bestehen. Diese Platten können beispielsweise für Einsatzgebiete mit hohen Sicherheitsanforderungen, z.B. in Gefängnissen, eingesetzt werden. Die Holz- und Metalllagen werden mit einem thermisch aushärtenden Harz verklebt.

Die DE 295 119 84 U1 beschreibt eine Sandwichplatte mit einem Schichtenaufbau aus Metall und Holz. Hier werden Holzfurnier- und Metallplatten wechselseitig miteinander verklebt. Die so entstandene Platte wird in Streifen gesägt und die Streifen werden beispielsweise als Anleimer für die optische Gestaltung von Möbeln verwendet.

In der US 4,470,357 ist eine Plattenkonstruktion aus Laubholz, Metall und Beton zur Herstellung von Gewölben in bestehenden Gebäuden beschrieben. Die Deckschichten aus Stahlblech sind mit einem Epoxydharz auf eine mehrlagige Mittelschicht aus Eichenholzplatten geklebt. In der Mittelschicht sind zwischen zwei Eichenholzplatten Kammern aus Stahlblech und U-förmigen Stahlprofilen ausgebildet, die mit den Eichenholzplatten verklebt sind: Diese Kammern werden mit Beton ausgegossen und verleihen der Plattenkonstruktion verbesserte Stoßfestigkeiten und Brandschutzeigenschaften.

Die US 4,520,057 beschreibt eine Kompositplatte, die aus einer Kernplatte besteht, die von einem Metallblech, das an den Kanten verschweißt ist, vollständig umgeben wird. Durch die Metallummantelung wird die Kernplatte luftdicht versiegelt, so dass die Kompositplatte feuerresitent, feuchtebeständig und vor Rauchentwicklung geschützt ist.

In der DE 297 13 040 wird eine Verbundplatte aus Holz und Metall beschreiben, bei der auf eine Trägerplatte aus Feinblech eine Dekorschicht aus Furnier aufgebracht wird, damit die Platte wie Blech schneid- und formbar ist.

Der Erfindung liegt die Aufgabe zugrunde, eine Bauplatte zur Verwendung als Decken- oder Wandelement im Hausbau zu schaffen, die als vorgefertigtes Element verwendet werden kann, die hohe Wärme- und Schalldämmeigenschaften besitzt und in der Herstellung kostengünstig ist.

Zur Lösung der Aufgabe zeichnet sich die Bauplatte durch eine Mehrzahl nebeneinander angeordneter OSB-Platten aus, die in mehreren Schichten miteinander verleimt sind.

Durch das Verbinden mehrerer Platten zu mehreren, jeweils zueinander versetzten Schichten wird eine hohe Stabilität der Bauplatte erreicht, die dennoch leicht ist. OSB (oriented strand board) weist gute mechanische Eigenschaften auf.

Um die Stabilität der Bauplatte zu erhöhen, sind die Schichten mehrerer Platten vorzugsweise zusätzlich über mechanische Verbindungsmittel (Nägel, Schrauben, Klammern) verbunden. Die Herstellung wird vereinfacht, wenn zwischen den einzelnen Schichten Nagelbleche zur zusätzlichen Befestigung eingesetzt werden.

Zur Erhöhung der Schall- und Wärmedämmung kann zwischen den Schichten eine Kunststoffmatte vorgesehen sein.

Die Trittschalleigenschaften können verbessert werden, wenn zwischen den Platten einer Schicht Zwischenräume vorgesehen werden. Diese Zwischenräume können auch mit einem Dämmmaterial ausgefüllt sein.

Die Bauplatte weist eine Länge von 2 bis 20 m, insbesondere 2 bis 10 m oder 4 bis 6 m auf. Die Dicke beträgt 50 bis 900 mm, insbesondere 100 bis 400 mm oder 100 bis 250 mm.

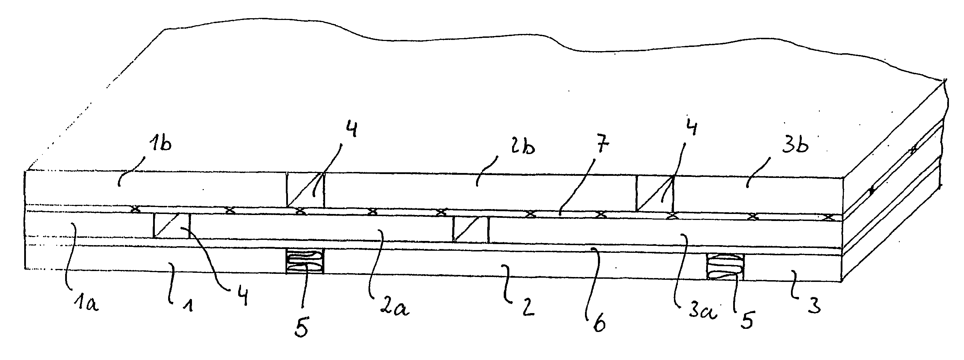

Mit Hilfe der Zeichnung, die eine perspektivische Darstellung einer Bauplatte zeigt, soll ein Ausführungsbeispiel der Erfindung nachfolgend beschrieben werden.

Die Bauplatte besteht aus mehreren OSB-Platten 1, 2, 3; 1 a, 2a, 3a; 1b, 2b, 3b, die zu mehreren Schichten übereinander verleimt sind. Als Klebstoff kommen Aminoplastharze, insbesondere melaminverstärkte Harnstoffharze, MUF, Phenol- und Resorcinharze oder Klebestoffe auf Basis von Polyurethan und Cyanaten sowie von Vinylacetaten, insbesondere PVAc in Frage. Die Oberfläche der OSB kann geschliffen oder nicht geschliffen sein. Die einzelnen Platten 1, 2, 3,... können eine Stärke zwischen 8 und 60 mm aufweisen. Zwischen einzelnen Platten 1a, 2a, 3a, ... einer Schicht könnten Zwischenräume 4 vorgesehen sein. Diese Zwischenräume 4 können mit einem Dämmstoff 5 ausgefüllt werden. Die Zwischenräume 4 verbessern die Schalldämmeigenschaften, die noch weiter verbessert werden können, wenn die Zwischenräume 4 mit Dämmmaterial 5 ausgefüllt sind. Die Zwischenräume 4 sind etwa 20 mm breit. Die Wärmedämm- und Schalldämmeigenschaften können weiter erhöht werden, wenn zwischen den einzelnen Schichten Kunststoffmatten 6 vorgesehen sind.

Zur Unterstützung der Verleimung der einzelnen Schichten können Nagelbleche 7 vorgesehen sein. Die einzelnen Schichten können auch zusätzlich miteinander vernagelt, verschraubt oder verklammert sein.

Mit der Bauplatte können bei Decken Spannweiten von 4 bis 10 m, bevorzugt zwischen 4 und 6 m, erreicht werden. Bei Wänden kann eine Spannweite von 2 bis 20 m und eine Breite von 2 bis 10 m erreicht werden. Die Dicke der Bauplatte zur Verwendung als Deckenelement beträgt zwischen 5 und 90 cm, vorzugsweise zwischen 10 und 40 cm. Die Dicke eines Wandelements beträgt zwischen 5 und 30 cm, vorzugsweise zwischen 10 und 25 cm.

## Patentansprüche

1. Bauplatte zur Verwendung als Decken- oder Wandelement im Hausbau, **gekennzeichnet durch** eine Mehrzahl nebeneinander angeordneter OSB-Platten (1, 2, 3; 1 a, 2a, 3a; 1b, 2b, 3b), die in mehreren Schichten miteinander verleimt sind.

2. Bauplatte nach Anspruch 1, **dadurch gekennzeichnet, dass** die Schichten mehrerer Platten (1, 2, 3; 1 a, 2a, 3a; 1 b, 2b, 3b) zusätzlich über mechanische Verbindungsmittel miteinander verbunden sind.

3. Bauplatte nach Anspruch 2, **dadurch gekennzeichnet, dass** zwischen je zwei übereinanderliegenden Schichten mindestens ein Nagelblech (7) angeordnet ist.

4. Bauplatte nach Anspruch 1, **dadurch gekennzeichnet, dass** zwischen zwei übereinanderliegenden Schichten mindestens eine Kunststoffmatte (6) angeordnet ist.

5. Bauplatte nach Anspruch 1, **dadurch gekennzeichnet, dass** zwischen den Platten (1, 2, 3; 1 a, 2a, 3a; 1 b, 2b, 3b) einer Schicht Zwischenräume (4) vorgesehen sind.

6. Bauplatte nach Anspruch 5, **dadurch gekennzeichnet, dass** die Zwischenräume (4) mit einem Dämmstoff (5) ausgefüllt sind.

7. Bauplatte nach einem oder mehreren der vorstehenden Ansprüche, **gekennzeichnet durch** eine Länge von 2 - 20 m, insbesondere 2 - 10 m oder 4 - 6 m.

8. Bauplatte nach einem oder mehreren der vorstehenden Ansprüche, **gekennzeichnet durch** eine Dicke von 50 - 90 mm, insbesondere 100 - 400 mm oder 100 - 250 mm.

## Claims

1. A building board for use as a ceiling or wall element in house building, **characterized by** a plurality of OSBs (1, 2, 3; 1a, 2a, 3a; 1b, 2b, 3b) which are disposed side by side and are bonded together in multiple layers.

2. The building board as claimed in claim 1, **characterized in that** the layers of a plurality of boards (1, 2, 3; 1a, 2a, 3a; 1b, 2b, 3b) are additionally connected to one another by mechanical connecting means.

3. The building board as claimed in claim 2, **characterized in that** at least one nail plate (7) is disposed between respectively two layers lying one on top of the other.

4. The building board as claimed in claim 1, **characterized in that** at least one plastics mat (6) is disposed between two layers lying one on top of the other.

5. The building board as claimed in claim 1, **characterized in that** interspaces (4) are provided between the boards (1, 2, 3; 1a, 2a, 3a; 1b, 2b, 3b) of a layer.

6. The building board as claimed in claim 5, **characterized in that** the interspaces (4) are filled with an insulating material (5).

7. The building board as claimed in one or more of the above claims, **characterized by** a length of 2 - 20 m, especially 2 - 10 m or 4 - 6 m.

8. The building board as claimed in one or more of the above claims, **characterized by** a thickness of 50 - 90 mm, especially 100 - 400 mm or 100 - 250 mm.

## Revendications

1. Panneau de construction utilisable en tant qu'élément de plafond ou de mur dans la construction de maisons, **caractérisé en ce qu'**il est constitué par une pluralité de plaques OSB (1, 2, 3 ; 1a, 2a, 3a ; 1b, 2b, 3b) disposées les unes à côté des autres en formant plusieurs couches collées les unes aux autres.

2. Panneau de construction, selon la revendication 1, **caractérisé en ce que** les couches de plusieurs plaques (1, 2, 3 ; 1a, 2a, 3a ; 1b, 2b, 3b) sont en outre reliées ensemble par des organes de liaison mécanique.

3. Panneau de construction selon la revendication 2, **caractérisé en ce qu'**entre chaque paire de couches superposées est disposée au moins une tôle à clous (7).

4. Panneau de construction selon la revendication 1, **caractérisé en ce qu'**entre chaque paire de couches superposées est disposée au moins une natte de matière synthétique (6).

5. Panneau de construction selon la revendication 1, **caractérisé en ce qu'**entre les plaques (1, 2, 3 ; 1a, 2a, 3a ; 1b, 2b, 3b) est prévue une couche d'espace intercalaire (4).

6. Panneau de construction selon la revendication 5, **caractérisé en ce que** l'espace intercalaire (4) est rempli d'une matière isolante (5).

7. Panneau de construction selon une ou plusieurs des revendications précédentes, **caractérisé par** une longueur comprise entre 2 et 20m en particulier, entre 2 et 10m ou 4 et 6m.

8. Panneau de construction selon une ou plusieurs des revendications précédentes, **caractérisé par** une épaisseur comprise entre 50 et 90mm, en particulier entre 100 et 400mm ou 100 et 250mm.
